# EUROPÄISCHE PATENTSCHRIFT

(11) **EP 3 883 747 B1**
(45) Veröffentlichungstag und Bekanntmachung des Hinweises auf die Patenterteilung: **29.05.2024**
(21) Anmeldenummer: 19801307.0
(22) Anmeldetag: 07.11.2019
(51) Int. Cl.: B29C 64/153, B33Y 50/02, B33Y 30/00, B33Y 10/00, B29C 64/393, B29C 64/282, B29C 64/241, B29C 64/214, B29C 64/277

(54) **VERFAHREN ZUR ADDITIVEN FERTIGUNG UND SYSTEM**
METHOD FOR ADDITIVE MANUFACTURE, AND SYSTEM
PROCÉDÉ DE FABRICATION ADDITIVE ET SYSTÈME

(30) Priorität: 19.11.2018 DE 102018129027
(43) Veröffentlichungstag der Anmeldung: 29.09.2021
(73) Patentinhaber: AMCM GmbH, 82319 Starnberg (DE)
(72) Erfinder: FEY, Georg, 80336 München (DE)
(74) Vertreter: Meissner Bolte Partnerschaft mbB
(86) Internationale Anmeldenummer: PCT/EP2019/080597
(87) Internationale Veröffentlichungsnummer: WO 2020/104209

(56) Entgegenhaltungen:
- EP-A1- 3 281 727
- DE-A1- 10 235 434

## Beschreibung

Die Erfindung betrifft ein Verfahren zur additiven Fertigung dreidimensionaler Objekte sowie ein System zur additiven Fertigung dreidimensionaler Objekte. Des Weiteren betrifft die vorliegende Erfindung ein computerlesbares Speichermedium.

Herkömmliche Verfahren zur additiven Fertigung von dreidimensionalen Objekten wenden eine strikt serielle Abfolge des Auftragens einer neuen Schicht von Aufbaumaterial und deren Bestrahlung zur Verfestigung der aufgetragenen Schicht an. Durch ein solch serielles Vorgehen entstehen sehr große Nebenzeiten, die die Effizienz des Systems im Gesamten reduzieren. Entsprechend kostenintensiv und langwierig ist die Herstellung bereits eines einzelnen dreidimensionalen Objektes mittels eines additiven Fertigungsverfahrens.

Darüber hinaus weisen bekannte Systeme zur additiven Fertigung von dreidimensionalen Objekten zusätzlichen Platzbedarf auf, um die Beschichtungseinheit während der Bestrahlung zur selektiven Verfestigung von zuletzt aufgetragenem Aufbaumaterial außerhalb des selektiv zu verfestigenden Bereiches, also außerhalb des Bauraums, unterbringen bzw. verstauen zu können.

Aus den Druckschriften DE 10 2010 041 284 A1 und DE 10 2009 046 440 A1 sind bereits Verfahren und Systeme zur additiven Fertigung von Bauteilen bekannt, die eine kontinuierliche Bewegung bzw. Rotation der Beschichtereinheit vorsehen. Aus der Druckschrift EP 3 281 727 A1 ist darüber hinaus eine Vorrichtung zur Herstellung eines dreidimensionalen Werkstückes mit mehreren Pulverapplikationsvorrichtungen bekannt.

Der Erfindung liegt die Aufgabe zugrunde, ein Verfahren zur additiven Fertigung anzugeben, welches auf einfache und kostengünstige Weise die effiziente Herstellung bzw. Erzeugung wenigstens eines dreidimensionalen Objektes bei gleichbleibender Qualität ermöglicht. Des Weiteren ist es Aufgabe der Erfindung ein System und ein computerlesbares Speichermedium anzugeben.

Erfindungsgemäß wird diese Aufgabe hinsichtlich des Verfahrens durch den Gegenstand des Anspruchs 1, hinsichtlich des Systems durch den Gegenstand des Anspruchs 7 und hinsichtlich des computerlesbaren Speichermediums durch den Gegenstand des Anspruchs 14 gelöst. Bevorzugte Ausführungsformen sind in den abhängigen Ansprüchen angegeben.

Konkret wird die Aufgabe durch ein Verfahren zur additiven Fertigung dreidimensionaler Objekte mittels eines Systems gelöst, welches einen Bauraum aufweist, eine Bauplattform innerhalb des Bauraums, auf der das wenigstens eine herzustellende Objekt schichtweise aufbaubar ist, wenigstens eine Beschichtungseinheit zum schichtweisen Aufbringen des Aufbaumaterials in einer Bauebene, die parallel zu der Bauplattform vorgesehen ist, und wenigstens eine erste Bestrahlungseinheit und eine zweite Bestrahlungseinheit zur örtlich selektiven Verfestigung des Aufbaumaterials in der Bauebene, wobei das Verfahren die folgenden Schritte aufweist:
- Unterteilen des Bauraums in wenigstens ein erstes und ein zweites Segment entlang der Erstreckungsrichtung der Bauplattform, wobei wenigstens eines der Segmente als Einzelsegment ausgebildet wird oder wenigstens eines der Segmente in wenigstens zwei Teilsegmente unterteilt wird und jedem Segment und/oder den Teilsegmenten eines Segments wenigstens eine der Bestrahlungseinheiten zugeordnet wird;
- Auftragen wenigstens einer Schicht des Aufbaumaterials mittels der sich bewegenden Beschichtungseinheit entlang der Segmente;
- Aktivieren der zugeordneten Bestrahlungseinheit in dem jeweiligen Segment oder wenigstens einem der Teilsegmente zur selektiven Verfestigung des zugehörigen Segments oder wenigstens eines der zugehörigen Teilsegmente sobald die Beschichtungseinheit das jeweilige Segment oder Teilsegment verlassen hat;
- Deaktivieren der jeweiligen Bestrahlungseinheit sobald eine bedarfsweise Bestrahlungsdauer erreicht und das zugehörige Segment oder Teilsegment selektiv verfestigt ist;
- Anhalten der Beschichtungseinheit in einem beliebigen, selektiv verfestigten Segment und/oder Teilsegment der darauffolgenden Segmente als einem Parksegment,
wobei die Beschichtungseinheit bis zum Erreichen des Parksegments nur Segmente und/oder Teilsegmente durchläuft, die selektiv verfestigt sind.

Die Erfindung basiert auf dem Grundgedanken ein Verfahren bereitzustellen, welches die Beschichtungseinheit und die Bestrahlungseinheiten derart einsetzt, sodass eine optimale Ausnutzung durch Minimierung der Nebenzeiten erzielt wird. Insbesondere kann die Prozessdauer zur Fertigung eines oder mehrerer dreidimensionaler Objekte optimiert bzw. reduziert werden.

Es ist hierzu vorgesehen, dass die Beschichtungseinheit nach dem Auftragen einer Schicht von Aufbaumaterial und dem Beginn der selektiven Verfestigung eine Parkposition in einem bereits selektiv verfestigten Segment einnimmt. In diesem Sinne kann die selektive Verfestigung in den übrigen Segmenten möglichst schnell beendet werden, um daraufhin die nächste Schicht von Aufbaumaterial auftragen zu können. Insbesondere wird die Beschichtungseinheit ausschließlich entlang der Erstreckungsrichtung der Bauplattform bewegt bzw. angehalten, sodass zusätzlicher Bauraum zur zumindest zwischenzeitlichen Unterbringung der Beschichtungseinheit eingespart werden kann.

Gegenüber einem System mit einer beweglichen Bauplattform und einer stationär angeordneten Beschichtungseinheit weist die vorliegende Erfindung den Vorteil auf, dass die Beschichtungseinheit im Vergleich zur Bauplattform eine kleinere Masse aufweist und somit in kürzerer Zeit angehalten und angefahren werden kann. Es ist eine vergleichsweise dynamischere Bewegung der Beschichtungseinheit möglich. Darüber hinaus nimmt die Masse der Bauplattform im Zuge des Fertigungsverfahrens mit dem Auftragen jeder weiteren Schicht von Aufbaumaterial sukzessive zu. Im Falle einer beweglichen Bauplattform bietet sich demnach ausschließlich eine kontinuierliche Bewegung der Bauplattform zur additiven Fertigung eines Bauteils an.

Im Sinne eines additiven Fertigungsprozesses ist es möglich, ein dreidimensionales Objekt oder mehrere dreidimensionale Objekte schichtweise aufzubauen bzw. zu erzeugen. So ist vorgesehen, dass die Geometrie des wenigstens einen dreidimensionalen Objekts erzeugt wird, indem Schichten des Aufbaumaterials schrittweise aufeinander abgelegt und verfestigt werden, insbesondere örtlich selektiv verfestigt werden.

Unter dem Begriff der selektiven Verfestigung ist im Sinne der vorliegenden Erfindung zu verstehen, dass eine Schicht von neu aufgetragenem Aufbaumaterial entlang der gewünschten Kontur bzw. den Konturen des wenigstens einen, herzustellenden dreidimensionalen Objektes zweckmäßig verfestigt wird. Hierzu wird die aufgetragene Schicht von Aufbaumaterial entlang der herzustellenden Geometrie des dreidimensionalen Objektes durch die Bestrahlungseinheiten gezielt bestrahlt. Eine Schicht von Aufbaumaterial ist im Sinne der vorliegenden Erfindung selektiv verfestigt, sobald eine hinreichende, zweckmäßige Verfestigung der Schicht von Aufbaumaterial erfolgt ist bzw. erreicht ist. Eine selektiv verfestigte Schicht von Aufbaumaterial stellt demnach einen Teil des zu erzeugenden Endproduktes und vorzugsweise die Basis dar, um eine weitere Schicht von Aufbaumaterial abzulegen und selektiv zu verfestigen.

Erfindungsgemäß wird der Bauraum, also das Volumen eines Systems zur Durchführung des Verfahrens in Erstreckungsrichtung bzw. entlang der Bauplattform, in dem das wenigstens eine oder mehrere dreidimensionale Objekte schichtweise aufbaubar sind, in wenigstens ein erstes und ein zweites Segment unterteilt. Die aufzutragenden bzw. abzulegenden Schichten von Aufbaumaterial sind abschnittsweise dem ersten oder zweiten Segment zuzuordnen. Die jeweils eingestellte Bauebene kann anhand der Segmente unterteilt werden.

Bevorzugter Weise ist die Bauplattform als eine kreisförmige bzw. ringförmige, ovalförmige, U-förmige, Rechteck-rahmenförmige oder dergleichen ausgebildete Bauplattform vorgesehen, sodass ein dreidimensionales Objekt oder mehrere dreidimensionale Objekte über einen Winkelbereich von 360 Grad entlang einer umlaufend bzw. zirkulär geschlossenen Bauplattform herstellbar und anordbar sind. Insofern kann unter einem Umlauf der Beschichtungseinheit verstanden werden, dass die Beschichtungseinheit über wenigstens 360 Grad entlang der Erstreckung der Bauplattform bewegt wird. Unter der Erstreckung der Bauplattform ist somit insbesondere die Ausbildung der Bauplattform in umlaufender Richtung entlang des Winkelbereiches von 360 Grad zu verstehen.

Des Weiteren können die Segmente als Einzelsegmente vorgesehen sein oder jeweils Teilsegmente aufweisen. So kann ein Segment wiederrum in Teilsegmente unterteilt werden bzw. unterteilbar sein.

Jeweils eine der wenigstens zwei Bestrahlungseinheiten wird einem der Segmente zugeordnet. Eine Bestrahlung von Teilsegmenten eines Segments durch eine der Bestrahlungseinheiten zur selektiven Verfestigung kann seriell, also nacheinander, erfolgen.

Alternativ können Teilsegmente mittels der zugeordneten Bestrahlungseinheit des Segments derart abwechselnd selektiv verfestigt werden, dass die Beschichtungseinheit sich durch die Teilsegmente hindurchbewegen kann und die Bestrahlungseinheit vor dem Ablauf der bedarfsweisen Bestrahlungsdauer in einem der Teilsegmente zur selektiven Verfestigung des anderen Teilsegmentes übergeht.

Demzufolge kann eine Bestrahlungseinheit während der selektiven Verfestigung zwischen zwei Teilsegmente bedarfsweise wechseln, insbesondere bevor die bedarfsweise Bestrahlungsdauer eines der Teilsegmente abgelaufen ist. Sofern ein Wechsel zwischen den Teilsegmenten durch die zugeordnete Bestrahlungseinheit erfolgt und in einem Teilsegment die bedarfsweise Bestrahlungsdauer nicht vollständig erreicht wurde, ist die selektive Verfestigung dieses Teilsegments zu einem späteren Zeitpunkt fortzusetzen, um eine selektive Verfestigung zu erreichen.

Es besteht der Vorteil, dass anhand der Teilsegmente eine effiziente selektive Verfestigung der aufgetragenen Schicht von Aufbaumaterial bereitgestellt werden kann.

Ein Deaktivieren einer Bestrahlungseinheit ist im Sinne der vorliegenden Erfindung als ein Abschalten der Bestrahlungseinheit oder als ein Wechsel der Bestrahlungseinheit zwischen Teilsegmenten zur selektiven Verfestigung zu verstehen, wobei die Bestrahlungseinheit von einem Teilsegment auf das andere Teilsegment umgestellt wird. Bei einer solcher Umstellung der Bestrahlungseinheit von einem Teilsegment auf ein anderes Teilsegment ist ein vollständiges Ausschalten der Bestrahlungseinheit im Sinne der vorliegenden Erfindung nicht zwingend notwendig, sodass die Bestrahlungseinheit Aufbaumaterial entlang der Teilsegmente ununterbrochen selektiv verfestigt.

Des Weiteren ist vorgesehen, dass die Beschichtungseinheit während des Auftragens einer neuen Schicht von Aufbaumaterial mit konstanter Geschwindigkeit, in Erstreckungsrichtung der Bauplattform bzw. Bauebene bewegt wird. Vorzugsweise wird die Geschwindigkeit, mit der die Beschichtungseinheit bewegt wird, derart eingestellt, dass eine vorteilhafte Minimierung der Nebenzeiten während der Herstellung bzw. Fertigung des wenigstens einen dreidimensionalen Objekts erzielbar ist.

Insbesondere wird die Beschichtungseinheit wenigstens mit einer minimalen Geschwindigkeit fortbewegt, wobei die minimale Geschwindigkeit zur Fortbewegung der Beschichtungseinheit einer Mindestgeschwindigkeit zum Ablegen bzw. Auftragen einer Schicht von Aufbaumaterial entspricht.

Bevorzugter Weise kann die Beschichtungseinheit mit einer maximalen Geschwindigkeit fortbewegt, wobei die maximale Geschwindigkeit zur Fortbewegung der Beschichtungseinheit einer Maximalgeschwindigkeit zum Ablegen bzw. Auftragen einer Schicht von Aufbaumaterial entspricht. Auf diese Weise kann die notwendige Zeit für einen Umlauf der Beschichtungseinheit, entlang der Erstreckung der Bauplattform bzw. der Bauebene, minimiert werden.

Ein Anhalten der Beschichtungseinheit in dem vorbestimmbaren Parksegment wird durchgeführt, wenn eine Umlaufdauer der Beschichtungseinheit zum Auftragen der wenigstens einen Schicht von Aufbaumaterial enden würde, bevor die bedarfsweise Bestrahlungsdauer in wenigstens einem der Segmente entlang der eingestellten Bauebene noch nicht erreicht bzw. abgelaufen ist. Demnach wird eine Parkposition eingenommen, wenn die Beschichtungseinheit beim Auftragen einer neuen Schicht von Aufbaumaterial in ein noch nicht vollständig selektiv verfestigtes Segment einfahren würde.

In diesem Sinne wird die Auftragung einer Schicht von Aufbaumaterial nur in einem zusammenhängenden, vollständigen Umlauf entlang der Bauebene ausgeführt. Ist dies aufgrund noch nicht selektiv verfestigter Segmente oder Teilsegmente nicht möglich, wird eine Parkposition durch die Beschichtungseinheit eingenommen.

Erfindungsgemäß erfolgt die selektive Verfestigung des Aufbaumaterials in einem Segment, wenn wenigstens eine Schicht von Aufbaumaterial entlang des gesamten Segments bzw. eines gesamten Teilsegments abgelegt ist durch Aktivierung der jeweils zugeordneten Bestrahlungseinheit.

Sofern ein Segment bzw. Teilsegment nur abschnittsweise mit Aufbaumaterial beschichtet ist, erfolgt vorzugsweise keine selektive Verfestigung bis die Beschichtungseinheit eine vollständige Schicht von Aufbaumaterial abgelegt hat. Die Aktivierung der jeweils zugeordneten Bestrahlungseinheit kann ausschließlich erfolgen, wenn sich die Beschichtungseinheit nicht in dem jeweiligen Segment bzw. Teilsegment, welches selektiv verfestigt werden soll, befindet. Des Weiteren wird die jeweilige Bestrahlungseinheit für ein Segment bzw. Teilsegment eines Segments nur aktiviert, wenn die zuletzt aufgetragene Schicht von Aufbaumaterial nicht bereits selektiv verfestigt ist.

Demzufolge erfolgt eine Deaktivierung der Bestrahlungseinheit im Sinne der vorliegenden Erfindung wenn ein Segment bzw. die zugehörigen Teilsegmente selektiv verfestigt ist/sind.

Des Weiteren ist im Sinne der vorliegenden Erfindung vorgesehen, dass das Auftragen von Aufbaumaterial durch die Beschichtungseinheit nach dem Auftragen wenigstens einer Schicht des Aufbaumaterials deaktiviert wird, wobei die Beschichtungseinheit in dem Parksegment angehalten bzw. gestoppt wird.

Insbesondere kann das Auftragen von Aufbaumaterial mittels der Beschichtungseinheit deaktiviert werden, sobald in allen Segmenten und/oder Teilsegmenten wenigstens eine vollständige Schicht von Aufbaumaterial abgelegt ist.

Unter einer vollständigen Schicht ist zu verstehen, dass Aufbaumaterial über die gesamte Erstreckung eines Segments bzw. Teilsegments abgelegt ist. In diesem Sinne vollzieht die Beschichtungseinheit wenigstens einen vollständigen Umlauf entlang der Bauplattform, um eine Schicht von Aufbaumaterial abzulegen. Sofern ein Segment bzw. Teilsegment nur teilweise neu beschichtet wurde, ist das anschließende Ablegen einer weiteren Schicht über die komplette Erstreckung des Segments bzw. Teilsegments zur Bereitstellung einer vollständigen Schicht von Aufbaumaterial vorgesehen, insbesondere im Anschluss an die übrigen Segmente im Zuge des zuletzt vollzogenen Umlaufs der Beschichtungseinheit.

Insbesondere wird die Beschichtungseinheit während der gesamten Prozessdauer immer wieder in Erstreckungsrichtung der Bauplattform bewegt, sodass eine bedarfsweise Abgabe einer neuen Schicht von Aufbaumaterial erfolgt. In diesem Sinne vollzieht die Beschichtungseinheit sequentielle Umläufe entlang der Erstreckung der Bauplattform.

Erfindungsgemäß kann die Beschichtungseinheit nach dem Auftragen wenigstens einer Schicht von Aufbaumaterial über einen beliebigen bzw. bedarfsweisen Zeitraum in dem Parksegment angehalten werden, bis eine neue Schicht von Aufbaumaterial zweckmäßig aufgetragen wird bzw. aufgetragen werden kann.

Im Sinne der Erfindung durchläuft die Beschichtungseinheit ausschließlich selektiv verfestigte Segmente oder nutzt ein selektiv verfestigtes als Parksegment.

Anhand der bedarfsweise bewegbaren Beschichtungseinheit, einschließlich dem Anhalten in dem Parksegment, und der gezielt abgestimmten Bestrahlung zur selektiven Verfestigung wenigstens einer aufgebrachten Schicht von Aufbaumaterial kann ein effizientes und zeitsparendes Verfahren für die additive Fertigung wenigstens eines dreidimensionalen Objektes bereitgestellt werden, insbesondere wenn die Beschichtungseinheit mit einer maximalen Geschwindigkeit bzw. Maximalgeschwindigkeit fortbewegt wird.

Durch die Unterteilung der Segmente in Teilsegmente kann die selektive Verfestigung anhand der zugeordneten Bestrahlungseinheit abwechselnd in den Teilsegmenten vorgenommen werden.

Die Bestrahlungseinheit kann im aktivierten Zustand zwischen Teilsegmenten wechseln.

Die Bestrahlungseinheiten zur selektiven Verfestigung der Segmente und/oder Teilsegmente werden gezielt aktiviert und deaktiviert, um eine effiziente und eine die Prozessdauer verkürzende Fertigung für wenigstens ein dreidimensionales Objekt bereitzustellen.

Die Prozessdauer beschreibt im Sinne der Erfindung insbesondere den Zeitraum zur vollständigen Herstellung bzw. Fertigung eines oder mehrerer, entlang der Bauplattform verteilt angeordneter, dreidimensionaler Objekte.

Unter einer bedarfsweisen Bestrahlungsdauer ist im Sinne der vorliegenden Erfindung derjenige Zeitraum zu verstehen, der zur selektiven Verfestigung der zuletzt aufgebrachten Schicht von Aufbaumaterial in einem Segment oder Teilsegment notwendig ist. So ist es vorstellbar, dass sich die bedarfsweise Bestrahlungsdauer verschiedener Segmente oder Teilsegmente voneinander unterscheiden.

Gemäß einer weiteren Ausführungsform erfolgt eine Änderung der Relativposition zwischen der Bauplattform und der Beschichtungseinheit zur Bereitstellung einer geänderten Bauebene kontinuierlich oder diskontinuierlich.

Die Geschwindigkeit der Beschichtungseinheit bzw. Beschichtungseinheitsgeschwindigkeit beschreibt im Sinne der vorliegenden Erfindung insbesondere die Geschwindigkeit, mit der sich die Beschichtungseinheit entlang der Erstreckung der Bauplattform bewegt, insbesondere in horizontaler Richtung. Die Geschwindigkeit der Relativbewegung zwischen Bauplattform und Beschichtungseinheit beschreibt die Geschwindigkeit im Zuge der Änderung der Relativposition zwischen Bauplattform und Beschichtungseinheit, insbesondere in vertikaler Richtung.

Die Fortbewegung der Beschichtungseinheit in Erstreckungsrichtung der Bauplattform ist während des Auftragens einer Schicht von Aufbaumaterial in kontinuierlicher Form vorgesehen. Ferner kann auch die Relativbewegung, bevorzugter Weise zumindest im Wesentlichen in vertikaler Richtung, zwischen Beschichtungseinheit und Bauplattform kontinuierlich erfolgen.

Somit kann eine fortlaufende bzw. kontinuierliche, also unterbrechungsfreie, Nachstellung der Bauebene mittels der Relativbewegung zwischen Bauplattform und Beschichtungseinheit zur Änderung der Relativposition erfolgen. So kann die Relativbewegung bzw. Nachstellung der Bauebene während des Auftragens einer Schicht von Aufbaumaterial als auch während des Anhaltens der Beschichtungseinheit in dem Parksegment fortgesetzt werden.

Alternativ ist eine diskontinuierliche Änderung der Relativposition zwischen Bauplattform und der Beschichtungseinheit, also schrittweise Nachstellung der Bauebene, möglich.

Nach einer Ausführungsform wird die Beschichtungseinheit in dem Parksegment weiterbewegt und mit dem Ablegen einer weiteren Schicht von Aufbaumaterial begonnen, wenn die Beschichtungseinheit einen Umlauf zum Auftragen einer Schicht von Aufbaumaterial vollziehen kann ohne in ein nicht selektiv verfestigtes Segment oder Teilsegment einzufahren.

Die Beschichtungseinheit, die in dem Parksegment angehalten bzw. geparkt ist, kann demnach weiterbewegt, also wieder "angefahren" werden. Ein Weiterbewegen der Beschichtungseinheit ist demnach im Sinne der Erfindung als ein erneutes Anfahren der Beschichtungseinheit aus dem Stillstand heraus zu verstehen.

Die Ablegung einer neuen Schicht von Aufbaumaterial durch die Beschichtungseinheit beginnt bevorzugter Weise erst, wenn die Bauebene bereits nachgestellt ist, also eine neue Bauebene eingestellt ist.

Unter dem Parksegment ist erfindungsgemäß dasjenige Segment oder Teilsegment zu verstehen, in dem die Beschichtungseinheit bedarfsweise anhaltbar ist und/oder nach der Änderung oder bei der Änderung der Relativposition zwischen Beschichtungseinheit und Bauplattform mit dem Ablegen einer Schicht von Aufbaumaterial entlang der neu eingestellten bzw. nachgestellten Bauebene beginnt. In dem Parksegment wird somit vorerst eine unvollständige Schicht von Aufbaumaterial über einen Abschnitt des Segmentes bzw. Teilsegments abgelegt.

Insbesondere kann mit dem Ablegen einer neuen Schicht von Baumaterial entlang der nachgestellten Bauebene durch die Beschichtungseinheit begonnen werden, wenn die selektive Verfestigung der zuvor abgelegten Schicht von Baumaterial hinreichend fortgeschritten ist und bis zum Eintritt der Beschichtungseinheit in dem jeweiligen Segment bzw. Teilsegment abgeschlossen ist. In diesem Sinne wird die neue Schicht von Aufbaumaterial ausschließlich auf bereits selektiv verfestigtes Aufbaumaterial aufgetragen.

Im Sinne der Erfindung sind die Begriffe "wenn" oder "sobald" vorzugsweise nicht als ein konkreter Zeitpunkt aufzufassen, sondern vielmehr als eine Festlegung von zu erfüllenden Bedingung anhand derer die Ausführung z.B. des Auftragens einer neuen Schicht von Aufbaumaterial festlegbar ist.

Nach dem Auftrag der Schicht von Aufbaumaterial wird die selektive Verfestigung anhand der zugeordneten Bestrahlungseinheit in einem auf das Parksegment nachfolgenden Segment und/oder Teilsegment begonnen bzw. durchgeführt.

Nach einer Ausführungsform legt die Beschichtungseinheit im Anschluss an die übrigen Segmente oder Teilsegmente eine vollständige Schicht von Aufbaumaterial in dem Parksegment ab.

Aufgrund des Ablegens einer unvollständigen Schicht von Aufbaumaterial entlang des Parksegments, nach der Wiederaufnahme bzw. Aktivierung der Auftragung von Aufbaumaterial, kann nach Verlassen der Beschichtungseinheit keine selektive Verfestigung durch die zugehörige Bestrahlungseinheit erfolgen. Mittels der Beschichtungseinheit muss eine weitere vollständige Schicht von Aufbaumaterial über das gesamte Parksegment aufgetragen werden, um eine selektive Verfestigung einleiten zu können.

Eine selektive Verfestigung des aufgetragenen Aufbaumaterials kann durch die Bestrahlungseinheiten in der eingestellten Bauebene oder einer abgesenkten bzw. nachgestellten Bauebene, beispielsweise im Zuge der kontinuierlichen Relativbewegung zwischen Bauplattform und Beschichtungseinheit, erfolgen. Dabei kann eine durch die Absenkung der Bauebene resultierende Abweichung, insbesondere eine Winkeländerung der Bestrahlung bzw. selektiven Verfestigung, berücksichtigt werden oder unberücksichtigt bleiben.

In einer weiteren Ausführungsform wird die Dauer eines Umlaufs der Beschichtungseinheit, als Zeitraum für die Beschichtungseinheit zur einmaligen Überschreitung aller Segmente, derart adaptiert, dass das Segment, welches als Parksegment vorgesehen ist, innerhalb eines einzelnen Umlaufs der Beschichtungseinheit zum Auftragen einer Schicht von Aufbaumaterial entlang aller Segmente selektiv verfestigt wird, sodass die Beschichtungseinheit in dem selektiv verfestigten Parksegment anhaltbar ist.

Somit kann die Beschichtungseinheit nach dem Auftragen einer Schicht von Aufbaumaterial, und gegebenenfalls nach dem Auftragen einer vollständigen Schicht entlang des vorhergehenden Parksegments, in das neue bzw. nachfolgende, vollständig selektiv verfestigte Parksegment einfahren und in diesem angehalten werden. Die Beschichtungseinheit kann während des laufenden Herstellungsprozesses entlang der Erstreckungsrichtung der Bauplattform angehalten werden, sodass kein zusätzlicher Bauraum zur bedarfsweisen Unterbringung der Beschichtungseinheit notwendig ist.

In einer Ausführungsform wird das Aktivieren der zugeordneten Bestrahlungseinheit mit dem Schritt ausgeführt, dass das Aktivieren der zugehörigen Bestrahlungseinheit in dem jeweiligen Segment zur wahlweisen Bestrahlung des zugehörigen ersten oder zweiten Teilsegments erfolgt, nachdem die Beschichtungseinheit das selektiv zu verfestigende Teilsegment verlassen hat. Die Beschichtungseinheit kann das erste Teilsegment als Parksegment verwenden, während das zweite Teilsegment selektiv verfestigt wird, oder kann das zweite Teilsegment als Parksegment verwenden, während das erste Teilsegment selektiv verfestigt wird.

Anhand der Teilsegmente kann eine vorteilhafte Untergliederung der Segmente vorgenommen werden, wobei die Teilsegmente seriell oder abwechselnd verfestigbar sind, um Nebenzeiten bei der Herstellung bzw. Fertigung wenigstens eines dreidimensionalen Objekts bedarfsweise zu minimieren.

In einem nebengeordneten Aspekt der Erfindung ist ein System vorgesehen, welches zur additiven Fertigung dreidimensionaler Objekte durch schichtweises Aufbringen eines Aufbaumaterials und örtlich selektives Verfestigen des Aufbaumaterials geeignet ist, umfassend eine Steuereinheit, welche dazu vorgesehen ist, das System gemäß dem erfindungsgemäßen Verfahren zu steuern und/oder zu regeln.

Das erfindungsgemäße System ist mit dem Bauraum ausgebildet, der Bauplattform innerhalb des Bauraums, auf der das wenigstens eine herzustellende Objekt schichtweise aufbaubar ist, der wenigstens einen Beschichtungseinheit zum schichtweisen Aufbringen des Aufbaumaterials in einer Bauebene, die parallel zu der Bauplattform vorgesehen ist, und wenigstens der ersten Bestrahlungseinheit und der zweiten Bestrahlungseinheit zur örtlich selektiven Verfestigung des Aufbaumaterials in der Bauebene. Der Bauraum ist in Erstreckungsrichtung der Bauplattform wenigstens in das erste Segment und in das zweite Segment unterteilt und wenigstens eines der Segmente ist als Einzelsegment ausgebildet oder wenigstens eines der Segmente ist in wenigstens zwei Teilsegmente unterteilt. Jedem Segment oder den Teilsegmenten eines Segments ist wenigstens eine der Bestrahlungseinheiten zugeordnet, wobei die Beschichtungseinheit nacheinander durch das erste Segment und das zweite Segment hindurch bewegbar ist zum Aufbringen einer Schicht von Aufbaumaterial. Die Segmente oder Teilsegmente sind jeweils mittels der zugeordneten Bestrahlungseinheit selektiv verfestigbar, sobald die Beschichtungseinheit eine vollständige Schicht von Aufbaumaterial in dem jeweiligen Segment oder Teilsegment aufgetragen hat und die Beschichtungseinheit das jeweilige Segment oder Teilsegment verlassen hat. Die Beschichtungseinheit ist in einem beliebigen, selektiv verfestigten Segment und/oder Teilsegment der darauffolgenden Segmente als einem Parksegment anhaltbar, wobei durch die Beschichtungseinheit bis zum Erreichen des Parksegments nur Segmente und/oder Teilsegmente durchlaufbar sind, die selektiv verfestigt sind.

Die wenigstens eine Beschichtungseinheit dient zum schichtweisen Aufbringen des Aufbaumaterials in einer Bauebene, die parallel zu der Bauplattform vorgesehen ist. Die Bauplattform stellt somit die Grundebene des Systems dar, auf der das wenigstens eine dreidimensionale Objekt erzeugbar ist. Beim Ablegen der ersten Schicht von Aufbaumaterial für ein zu fertigendes Objekt ist die Bauebene demnach vorzugsweise auf der Bauplattform angeordnet.

Alternativ kann die erste Bauebene zum Auftragen der ersten Schicht von Aufbaumaterial derart gegenüber der Bauplattform vertikal versetzt vorgesehen sein, dass unterhalb der schließlich selektiv verfestigten Schicht von Aufbaumaterial ein Pulverbett bzw. nicht selektiv verfestigtes Materialbett verbleibt. Somit kann ein Ablösen des fertigen dreidimensionalen Objektes von der Bauplattform erleichtert werden.

Die Beschichtungseinheit kann derart gegenüber der Vertikalen bzw. Horizontalen geneigt angeordnet sein, sodass ein zweckmäßiges Auftragen von Aufbaumaterial entlang der vorgesehenen, eingestellten Bauebene möglich ist. Insbesondere kann die Beschichtungseinheit derart geneigt angeordnet sein, dass Schwerkrafteffekte beim Ablegen bzw. Auftragen des Aufbaumaterials kompensierbar sind.

Die Bauebene beschreibt im Sinne der vorliegenden Erfindung insbesondere die aktuelle Arbeitsebene, in der eine neue, weitere Schicht von Aufbaumaterial aufgetragen bzw. selektiv verfestigt werden soll. Die Nachstellung der Bauebene bzw. eine nachgestellte Bauebene beschreibt somit die Änderung der Bauebene, um eine neue, nächste Schicht von Aufbaumaterial auftragen und selektiv verfestigen zu können, im Sinne einer schichtweisen Fertigung bzw. Erzeugung wenigstens eines dreidimensionalen Objektes.

Eine solche Nachstellung der Bauebene kann durch eine Änderung der Relativposition zwischen Beschichtungseinheit und Bauplattform erfolgen, insbesondere indem die Bauplattform oder die Beschichtungseinheit in vertikaler Richtung verfahren bzw. bewegt wird.

Nach einer Ausführungsform bilden die wenigstens zwei Segmente und/oder deren Teilsegmente entlang der Bauebene eine geschlossene Bahn, insbesondere Kreisbahn, aus, insbesondere sodass die Beschichtungseinheit unmittelbar, oder mittelbar über mindestens ein weiteres Segment oder dessen Teilsegmente, von dem ersten Segment in das zweite Segment und von dem zweiten Segment in das erste Segment übertreten kann.

Die Segmente bzw. Teilsegmente sind derart vorgesehen, dass eine durchgehende, unterbrechungsfreie Fläche mittels den Bestrahlungseinheiten sowie der Beschichtungseinheit zur Herstellung bzw. Fertigung wenigstens eines dreidimensionalen Objektes verfügbar ist. Der Übertritt zwischen insbesondere benachbart angeordneten Segmenten bzw. Teilsegmenten kann somit unmittelbar erfolgen.

Beispielsweise können bei Ausbildung von drei Segmenten unmittelbare Übertritte zwischen dem ersten und zweiten Segment, dem zweiten und dritten Segment sowie dem dritten und ersten Segment erfolgen. Ein mittelbarer Übertritt wäre beispielsweise zwischen dem ersten und dritten Segment, mit dem dazwischenliegenden zweiten Segment, möglich.

Indem die Bauplattform vorzugsweise ringförmig ausgestaltet ist, können mittels der Bestrahlungseinheiten und der Beschichtungseinheit zirkulär bzw. über einen Winkelbereich von 360 Grad mehrere oder ein einzelnes dreidimensionales Objekt gefertigt bzw. hergestellt werden.

In einer Ausführungsform sind die einzelnen Segmente und/oder deren Teilsegmente entlang der Bauplattform mit identischer Größe ausgebildet und/oder weisen eine vergleichbare Bestrahlungsdauer zur selektiven Verfestigung der aufgebrachten Schicht von Aufbaumaterial entlang der Bauebene auf, sodass eine Gesamtbestrahlungsdauer zur selektiven Verfestigung wenigstens einer Schicht oder mehrerer Schichten des aufgebrachten Aufbaumaterials entlang aller Segmente und/oder Teilsegmente in der Bauebene minimierbar ist bzw. minimiert ist.

Insbesondere kann die Minimierung der jeweiligen Gesamtbestrahlungsdauer zur selektiven Verfestigung einer, mehrerer oder aller Schichten des aufgebrachten Aufbaumaterials für das wenigstens eine herzustellende dreidimensionale Objekt entlang der Segmente bzw. Teilsegmente erfolgen.

Insbesondere werden die Segmente bzw. Teilsegmente entlang der Erstreckung der Bauplattform derart verteilt ausgebildet, sodass eine optimale, also vorzugsweise minimale, Gesamtbestrahlungsdauer für die einzelne Schicht oder mehrere Schichten von Aufbaumaterial erzielt werden kann.

Im Sinne der vorliegenden Erfindung ist unter der Gesamtbestrahlungsdauer der Zeitraum zur selektiven Verfestigung der abgelegten Schicht von Aufbaumaterial in allen Segmenten bzw. Teilsegmenten zu verstehen. Somit beginnt die Gesamtbestrahlungsdauer mit dem Start der selektiven Verfestigung in dem zuerst vollständig beschichteten Segment und endet mit der selektiven Verfestigung bzw. dem Ende der selektiven Verfestigung in dem zuletzt selektiv verfestigten Segment derselben Schicht von Aufbaumaterial.

Indem Nebenzeiten, zusätzlich zur Gesamtbestrahlungsdauer der Vielzahl von Schichten, reduzierbar sind, kann die Prozessdauer zur Herstellung bzw. Fertigung des wenigstens einen dreidimensionalen Objektes reduziert werden. Es sind jeweils höchstens kurze Unterbrechungen der selektiven Verfestigung notwendig, um neues Aufbaumaterial aufzutragen. Beispielsweise können umfangreiche Verfahrwege der Beschichtungseinheit in Bereiche neben der Bauebene bzw. der Bauplattform, um die Beschichtungseinheit während der selektiven Verfestigung parken bzw. unterbringen zu können, eingespart werden.

Gemäß einer weiteren Ausführungsform ist das System dazu ausgebildet, eine Relativbewegung zur Änderung der vertikalen Relativposition zwischen der Bauplattform und der Beschichtungseinheit innerhalb des Bauraums kontinuierlich oder diskontinuierlich bereitzustellen.

Die Nachstellung bzw. Neueinstellung der Bauebene kann während des Auftragens oder nach dem Abschluss des Auftragens einer vorherigen bzw. vorhergehenden Schicht von Aufbaumaterial, insbesondere einer vollständigen Schicht von Aufbaumaterial entlang aller Segmente bzw. Teilsegmente, erfolgen bzw. begonnen werden. So kann die Nachstellung bzw. Neueinstellung der Bauebene auch bereits durchgeführt werden, wenn wenigstens eines der Segmente bzw. Teilsegmente noch nicht selektiv verfestigt ist.

Sowohl bei der diskontinuierlichen als auch der kontinuierlichen Nachstellung der Bauebene durch eine Relativbewegung zwischen der Bauplattform und der Beschichtungseinheit können Abweichungen während der selektiven Verfestigung von Aufbaumaterial unberücksichtigt bleiben oder durch eine Adaption der Bestrahlungseinheiten, insbesondere durch eine Winkeländerung, kompensierbar sein.

Im Sinne einer Fortbewegung der Beschichtungseinheit, kann sich die Beschichtungseinheit während der Nachstellung der Bauebene, also während der vertikalen Relativbewegung zwischen Beschichtungseinheit und Bauplattform, in Erstreckungsrichtung der Bauplattform bewegen. Während des Auftragens von Aufbaumaterial entlang einer Bauebene kann bereits die Nachstellung für die darauffolgende Bauebene erfolgen bzw. begonnen werden. Insbesondere kann die Relativbewegung bzw. Nachstellung der Bauebene auch während des Anhaltens der Beschichtungseinheit in dem Parksegment begonnen oder fortgesetzt werden.

In einer Ausführungsform ist die Beschichtungseinheit in dem Parksegment weiterbewegbar und das Ablegen einer weiteren Schicht von Aufbaumaterial bereitstellbar, wenn die Beschichtungseinheit einen Umlauf zum Auftragen einer Schicht von Aufbaumaterial vollziehen kann ohne in ein nicht selektiv verfestigtes Segment oder Teilsegment einzufahren.

In Abhängigkeit von dem Fortschritt der selektiven Verfestigung der zuletzt aufgetragenen Schicht von Aufbaumaterial kann jeweils zum nächstmöglichen Zeitpunkt eine neue Schicht von Aufbaumaterial aufgetragen werden. So ist eine effiziente Herstellung bzw. Fertigung wenigstens eines dreidimensionalen Objektes bereitstellbar, indem die Nebenzeiten, und somit die Prozessdauer im Gesamten, minimiert werden können bzw. minimierbar sind.

Nach einer bevorzugten Ausführungsform ist die Beschichtungseinheit nacheinander durch das erste Teilsegment und das zweite Teilsegment hindurch bewegbar, wobei das erste und zweite Teilsegment des jeweiligen Segmentes mittels der zugehörigen Bestrahlungseinheit nacheinander oder abwechselnd selektiv verfestigbar sind. Das erste Teilsegment ist als Parksegment bereitstellbar, während das zweite Teilsegment selektiv verfestigbar ist oder das zweite Teilsegment ist als Parksegment bereitstellbar, während das erste Teilsegment selektiv verfestigbar ist.

Somit kann ein Segment anhand der Unterteilung in Teilsegmente bedarfsweise bzw. abschnittsweise nutzbar gemacht werden, insbesondere sodass Nebenzeiten während der Fertigung wenigstens eines dreidimensionalen Objektes reduzierbar sind.

Nach einer weiteren Ausführungsform ist die Steuereinheit vorzugsweise dazu ausgelegt, die Bewegung und/oder die Dauer eines Umlaufs der Beschichtungseinheit sowie das Aufbringen von Aufbaumaterial durch die Beschichtungseinheit, die Aktivierung und Deaktivierung wenigstens einer der Bestrahlungseinheiten, vorzugsweise mehrerer Bestrahlungseinheiten, besonders bevorzugt aller Bestrahlungseinheiten, und/oder die Ausführung der vertikalen Relativbewegung zwischen der Bauplattform und der Beschichtungseinheit innerhalb des Bauraums zu steuern.

Die Steuereinheit des erfindungsgemäßen Systems ist dazu vorgesehen, das System im Sinne des erfindungsgemäßen Verfahrens zu steuern und/oder zu regeln. Insofern ist die Steuereinheit dazu ausgebildet, mit dem System ein erfindungsgemäßes Verfahren auszuführen bzw. durchzuführen.

Es kann eine effiziente und Prozessdauer-optimierte, additive Fertigung wenigstens eines dreidimensionalen Objektes bereitgestellt werden.

Gemäß einem weiteren nebengeordneten Aspekt der Erfindung ist ein computerlesbares Speichermedium gemäß Anspruch 14 vorgesehen.

Die Erfindung wird nachstehend mit weiteren Einzelheiten unter Bezug auf die beigefügten schematischen Zeichnungen anhand von Ausführungsbeispielen näher erläutert.

In diesen zeigen:
- Fig. 1-5: schematische Darstellungen verschiedener Zustände während eines exemplarischen Ablaufs des erfindungsgemäßen Verfahrens mittels eines erfindungsgemäßen Systems; und
- Fig. 6: ein Ausführungsbeispiel eines erfindungsgemäßen Systems zur additiven Fertigung wenigstens eines dreidimensionalen Objektes in einer perspektivischen Schnittdarstellung.

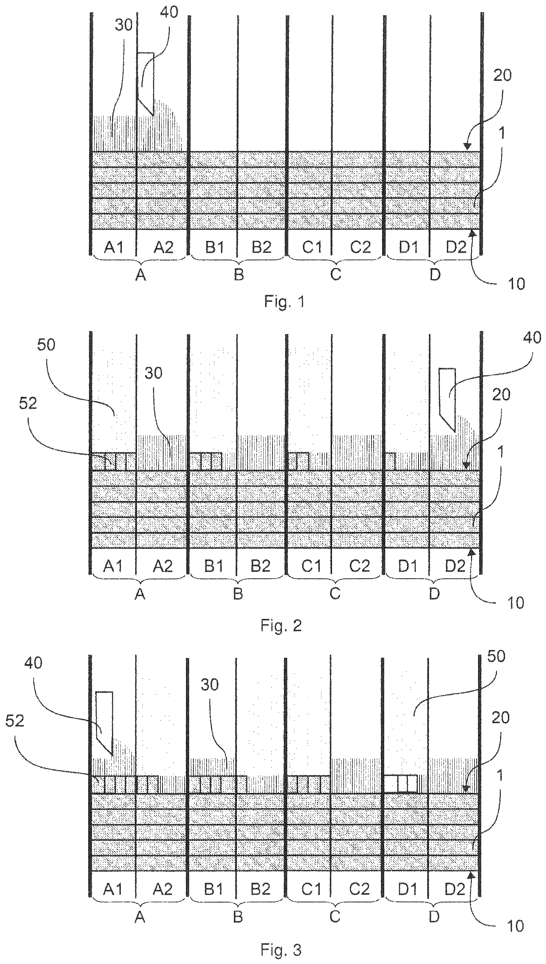

In Fig. 1 ist eine schematische Querschnittsansicht einer Bauplattform 10 gezeigt, die in insgesamt vier Segmente A; B; C; D unterteilt ist. Auf der Bauplattform sind gemäß Fig. 1 fünf selektiv verfestigte Schichten zur Ausbildung wenigstens eines dreidimensionalen Objektes 1 vorhanden.

Die gemäß Fig. 1 vorgesehene Bauebene 20 ist auf der obersten, selektiv verfestigten Schicht von Aufbaumaterial 30 des zu fertigenden Objektes 1 eingestellt. Entlang der Bauebene 20 legt eine Beschichtungseinheit 40 gemäß Fig. 1 über die Erstreckung des ersten Segments A eine Schicht von Aufbaumaterial 30 ab.

Im Sinne der Fig. 1-5 ist eine Bewegung der Beschichtungseinheit 40 als eine Bewegung von links nach rechts durch die Segmente A bis D entlang der Bauplattform 10 zu verstehen. Vorzugsweise weisen die Segmente A; B; C; D vergleichbare, insbesondere identische bedarfsweise Bestrahlungsdauern zur selektiven Verfestigung von aufgetragenem Aufbaumaterial 30 auf.

Eine vorzugsweise ringförmige Ausbildung der Bauplattform 10 wird in den Fig. 1 bis 5 dadurch verdeutlicht, dass die Beschichtungseinheit unmittelbar aus dem vierten Segment D in das erste Segment A übertritt, zur Ausübung einer kreisförmigen Bewegung bzw. eines Umlaufes.

In Fig. 1 ist ferner gezeigt, dass die Segmente A; B; C; D zusätzlich in jeweils zwei Teilsegmente A1; A2; B1; B2; C1; C2; D1; D2 unterteilt sind. Die Beschichtungseinheit 40 kann eine Schicht von Aufbaumaterial 30 entlang der Teilsegmente A1; A2; B1; B2; C1; C2; D1; D2 auftragen, um eine vollständige Schicht von Aufbaumaterial 30 abzulegen.

In diesem Sinne können die Teilsegmente A1-D2 der Segmente A-D vergleichbare, insbesondere identische, bedarfsweise Bestrahlungsdauern zur selektiven Verfestigung von aufgetragenem Aufbaumaterial 30 aufweisen.

In Fig. 2 ist in den ersten Teilsegment A1; B1; C1; D1 der Segmente A; B; C; D die selektive Verfestigung des Aufbaumaterials 30 mittels der jeweils zugeordneten Bestrahlungseinheit 50 eingeleitet worden, insbesondere jeweils unmittelbar nach dem Ausfahren der Beschichtungseinheit 40 aus dem jeweiligen Teilsegment A1; B1; C1; D1.

Insbesondere ist den Teilsegmenten A1; A2; B1; B2; C1; C2; D1; D2 jeweils eines Segments A; B; C; D eine gemeinsame Bestrahlungseinheit 50 zugeordnet, die die Teilsegmente A1; A2; B1; B2; C1; C2; D1; D2 eines Segments A; B; C; D seriell oder abwechselnd selektiv verfestigen kann. So ist in Fig. 2 dargestellt, dass nach dem Aufbringen einer vollständigen Schicht von Aufbaumaterial 30 jeweils das erste Teilsegment A1; B1; C1; D1 der Segmente A; B; C; D selektiv verfestigt wird.

Jeweilige Fortschrittsindikatoren 52 indizieren den Fortgang der selektiven Verfestigung. So ist gezeigt, dass gemäß Fig. 2 die selektive Verfestigung des ersten Teilsegments A1 des ersten Segments A bis zum erneuten Eintritt der Beschichtungseinheit 40 abgeschlossen ist. Anschließend wird das zweite Teilsegment A2 des ersten Segments A anhand der zugeordneten Bestrahlungseinheit 40 selektiv verfestigt.

Nachdem die ersten Teilsegmente A1; B1; C1; D1 selektiv verfestigt sind, können die einzelnen Bestrahlungseinheiten 50 jeweils mit der selektiven Verfestigung des zweiten Teilsegments A2; B2; C2; D2 fortfahren.

So kann die Beschichtungseinheit 40 in das selektiv verfestigte erste Teilsegment A1 des ersten Segments A einfahren, welches gemäß Fig. 3 das Parksegment darstellt.

In Fig. 3 ist die bedarfsweise Bestrahlungsdauer des ersten Teilsegments A1 des ersten Segments A abgelaufen und das zuletzt aufgetragene Aufbaumaterial 30 somit selektiv verfestigt. Anschließend an das erste Teilsegment A1 wird in Fig. 3 das zweite Teilsegment A2 des ersten Segments A mit derselben, zugeordneten Bestrahlungseinheit 50 bis zum Ablauf der jeweiligen bedarfsweisen Bestrahlungsdauer selektiv verfestigt. Selbiges gilt für das erste und zweite Teilsegment B1; B2 des zweiten Segments B. In diesem Sinne liegt eine serielle selektive Verfestigung der Teilsegmente A1-D2 der jeweiligen Segmente A-D vor.

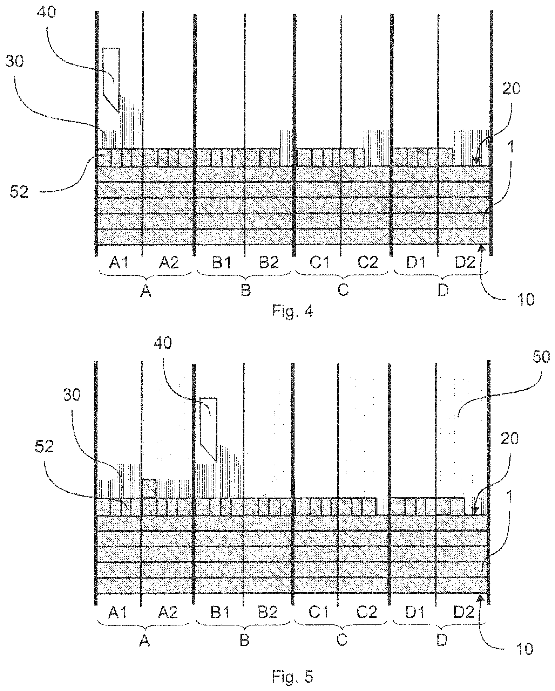

Ferner wird in Fig. 4 während einer Unterbrechung der selektiven Verfestigung in allen Teilsegmenten A1-D2 die Bauebene 20 nachgestellt, indem die vertikale Relativposition zwischen Beschichtungseinheit 40 und Bauplattform 10 geändert, insbesondere in vertikaler Richtung weiter beabstandet, wird. So kann gemäß Fig. 4 mit dem Aufbringen einer weiteren Schicht von Aufbaumaterial 30 in dem ersten Teilsegment A1 des ersten Segments A bereits begonnen werden, selbst wenn in den übrigen Segmenten B-D die selektive Verfestigung der zuvor abgelegten Schicht von Aufbaumaterial 30, gemäß den jeweiligen Fortschrittsindikatoren 52, noch nicht vollständig abgeschlossen ist.

Sofern eine selektive Verfestigung der vollständigen Schicht von Aufbaumaterial in den nachfolgenden Segmenten B; C; D noch nicht derart fortgeschritten ist, dass eine Nachstellung der Bauebene und/oder das Ablegen einer neuen Schicht von Aufbaumaterial 30 erfolgen kann, verbleibt die Beschichtungseinheit 40 hingegen in der Parkposition in dem Parksegment.

Aus Fig. 5 ist ersichtlich, dass das erste Segment A bzw. dessen erstes Teilsegment A1 nur teilweise mit Aufbaumaterial 30 in der nachgestellten Bauebene 20 bedeckt ist. Die Beschichtungseinheit 40 fährt zur Auftragung von einer weiteren Schicht von Aufbaumaterial 30 mit dem Ablauf der bedarfsweisen Bestrahlungsdauer in das zweite Teilsegment B2 des zweiten Segments B ein. Anhand dieser zeitlichen Abstimmung von selektiver Verfestigung und dem Auftragen einer neuen Schicht von Aufbaumaterial 30, werden die Nebenzeiten des Fertigungsprozesses bzw. des Herstellungsprozesses für das wenigstens eine dreidimensionale Objekt 1 reduziert.

Des Weiteren ist in Fig. 5 gezeigt, dass in dem ersten, zweiten, dritten und vierten Segment A; B; C; D, die selektive Verfestigung durch die zugehörige Bestrahlungseinheit 50 begonnen bzw. fortgesetzt wurde, zur vollständigen selektiven Verfestigung bis die Beschichtungseinheit 40 wieder in das jeweilige Segment A-D bzw. in die Teilsegmente B2-D2; A2 einfährt.

Hingegen wird in dem lediglich teilweise beschichteten ersten Teilsegment A1 des ersten Segments A als Parksegment keine selektive Verfestigung durchgeführt, bis die Beschichtungseinheit 40 in dem folgenden Umlauf eine vollständige Schicht von Aufbaumaterial 30 über die gesamte Erstreckung des ersten Teilsegments A1 des ersten Segments A abgelegt hat. Vielmehr wird in diesem Falle zuerst das vollständig beschichtete, zweite Teilsegment A2 des ersten Segments A zuerst selektiv verfestigt.

In diesem Sinne kann das Parksegment jeweils über die Segmente A; B; C; D bzw. Teilsegmente A1-D2 wandern, im Zuge der Änderung der Relativposition zwischen der Beschichtungseinheit 40 und der Bauplattform 10 zur Bereitstellung einer nachgestellten Bauebene 20.

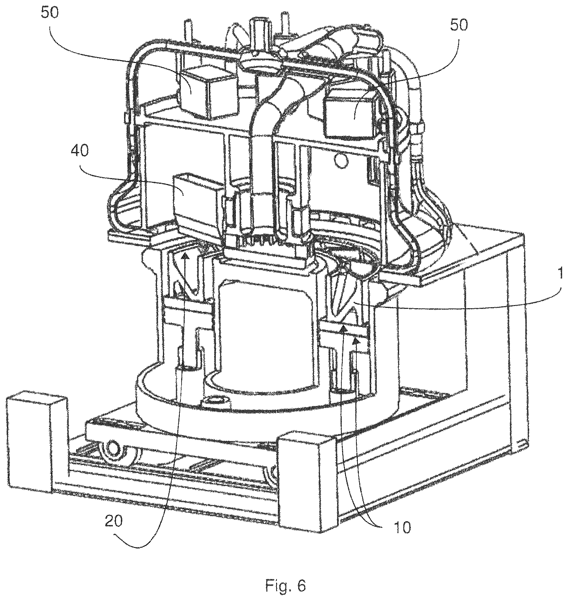

In Fig. 6 ist ein Ausführungsbeispiel eines erfindungsgemäßen Systems zur additiven Fertigung wenigstens eines dreidimensionalen Objektes 1 in einem perspektivischen Querschnitt gezeigt.

Das System weist die Bauplattform 10 auf, oberhalb der ein Bauraum zum schichtweisen Aufbau wenigstens eines dreidimensionalen Objekts 1 ausgebildet ist. Insbesondere kann ein dreidimensionales Objekt 1 oder können mehrere dreidimensionalen Objekte 1 entlang der ringförmigen bzw. kreisrunden Erstreckung der Bauplattform 10 verteilt schichtweise aufgebaut werden.

Die Beschichtungseinheit 40 ist oberhalb und vertikal beabstandet zu der Bauplattform 10 angeordnet und kann Aufbaumaterial 30 entlang der jeweils eingestellten Bauebene 20 im Sinne eines schichtweisen Aufbaus auftragen bzw. ablegen.

Oberhalb und vertikal beabstandet zu der Beschichtungseinheit 40 sind Bestrahlungseinheiten 50 über die Erstreckung der ringförmig ausgestalteten Bauplattform 10 verteilt angeordnet. Insbesondere sind die Bestrahlungseinheiten 50 jeweils den Segmenten A; B; C; D zur selektiven Verfestigung zugeordnet und angeordnet.

Zusammenfassend kann anhand des gezielten Einsatzes der Bestrahlungseinheiten 50 sowie der Beschichtungseinheit 40, die bedarfsweise in einem Parksegment angehalten werden kann, eine zeitoptimierte Fertigung wenigstens eines dreidimensionalen Objektes 1 ermöglicht werden. Anhand des Parksegments können ein zusätzlicher Bauraum sowie Verfahrwege zur zeitweisen Unterbringung der Beschichtungseinheit 40 außerhalb des Bauraums eingespart werden. Durch die Bewegung der Beschichtungseinheit 40 mit vorzugsweise maximaler Geschwindigkeit, können ferner die Zeiträume, in denen die Bestrahlungseinheiten 50 keine selektive Verfestigung durchführen können, verkürzt und somit die Herstellungszeit bzw. Prozessdauer insgesamt reduziert werden.

In diesem Sinne sind durch das parallele Ablegen von Aufbaumaterial 30 und die selektive Verfestigung entlang von Abschnitten bzw. Segmenten A-D und/oder Teilsegmenten A1; A2; B1; B2; C1; C2; D1; D2 in der eingestellten Bauebene 20 die Nebenzeiten für die additive Fertigung reduzierbar, die Effizienz der Systemauslastung bei der Herstellung dreidimensionaler Objekte 1, insbesondere auch eines einzelnen großen, dreidimensionalen Objektes 1, optimierbar und eine hinreichende Qualität des resultierenden dreidimensionalen Objektes 1 sicherstellbar.

### Bezugszeichenliste

- 1: herzustellendes Objekt / prozessierte Schichten von Aufbaumaterial
- 10: Bauplattform
- 20: Bauebene
- 30: aufzutragende Schicht von Aufbaumaterial
- 40: Beschichtungseinheit
- 50: aktivierte Bestrahlungseinheit
- 52: Fortschrittsindikatoren
- A; B; C; D: Segmente
- A1; A2: Teilsegmente des ersten Segments
- B1; B2: Teilsegmente des zweiten Segments
- C1; C2: Teilsegmente des dritten Segments
- D1; D2: Teilsegmente des vierten Segments

## Patentansprüche

1. Verfahren zur additiven Fertigung dreidimensionaler Objekte (1) mittels eines Systems, welches einen Bauraum aufweist, eine Bauplattform (10) innerhalb des Bauraums, auf der das wenigstens eine herzustellende Objekt (1) schichtweise aufbaubar ist, wenigstens eine Beschichtungseinheit (40) zum schichtweisen Aufbringen des Aufbaumaterials (30) in einer Bauebene (20), die parallel zu der Bauplattform (10) vorgesehen ist, und wenigstens eine erste Bestrahlungseinheit (50) und eine zweite Bestrahlungseinheit (50) zur örtlich selektiven Verfestigung des Aufbaumaterials (30) in der Bauebene (20),
wobei das Verfahren die folgenden Schritte aufweist:
- Unterteilen des Bauraums in wenigstens ein erstes und ein zweites Segment (A; B) entlang der Erstreckungsrichtung der Bauplattform (10), wobei wenigstens eines der Segmente (A; B; C; D) als Einzelsegment ausgebildet wird oder wenigstens eines der Segmente (A; B; C; D) in wenigstens zwei Teilsegmente (A1; A2; B1; B2; C1; C2; D1; D2) unterteilt wird und jedem Segment (A; B; C; D) und/oder den Teilsegmenten (A1; A2; B1; B2; C1; C2; D1; D2) eines Segments (A; B; C; D) wenigstens eine der Bestrahlungseinheiten (50) zugeordnet wird;
- Auftragen wenigstens einer Schicht des Aufbaumaterials (30) mittels der sich bewegenden Beschichtungseinheit (40) entlang der Segmente (A; B; C; D);
- Aktivieren der zugeordneten Bestrahlungseinheit (50) in dem jeweiligen Segment (A; B; C; D) oder wenigstens einem der Teilsegmente (A1; A2; B1; B2; C1; C2; D1; D2) zur selektiven Verfestigung des zugehörigen Segments (A; B; C; D) oder wenigstens eines der zugehörigen Teilsegmente (A1; A2; B1; B2; C1; C2; D1; D2) sobald die Beschichtungseinheit (40) das jeweilige Segment (A; B; C; D) oder Teilsegment (A1; A2; B1; B2; C1; C2; D1; D2) verlassen hat;
- Deaktivieren der jeweiligen Bestrahlungseinheit (50) sobald eine bedarfsweise Bestrahlungsdauer erreicht und das zugehörige Segment (A; B; C; D) oder Teilsegment (A1; A2; B1; B2; C1; C2; D1; D2) selektiv verfestigt ist;
- Anhalten der Beschichtungseinheit (40) in einem beliebigen, selektiv verfestigten Segment (A; B; C; D) und/oder Teilsegment (A1; A2; B1; B2; C1; C2; D1; D2) der darauffolgenden Segmente (A; B; C; D) als einem Parksegment,
wobei die Beschichtungseinheit (40) bis zum Erreichen des Parksegments nur Segmente (A; B; C; D) und/oder Teilsegmente (A1; A2; B1; B2; C1; C2; D1; D2) durchläuft, die selektiv verfestigt sind.

2. Verfahren nach Anspruch 1,
**dadurch gekennzeichnet, dass**
eine Änderung einer Relativposition zwischen der Bauplattform (10) und der Beschichtungseinheit (40) zur Bereitstellung einer geänderten Bauebene (20) kontinuierlich oder diskontinuierlich erfolgt.

3. Verfahren nach Anspruch 1 oder 2,
**dadurch gekennzeichnet, dass**
die Beschichtungseinheit (40) in dem Parksegment weiterbewegt wird und mit dem Ablegen einer weiteren Schicht von Aufbaumaterial (30) begonnen wird, wenn die Beschichtungseinheit (40) einen Umlauf zum Auftragen einer Schicht von Aufbaumaterial (30) vollziehen kann ohne in ein nicht selektiv verfestigtes Segment (A;B;C;D) oder Teilsegment (A1; A2; B1; B2; C1; C2; D1; D2) einzufahren.

4. Verfahren nach Anspruch 3,
**dadurch gekennzeichnet, dass**
die Beschichtungseinheit (40) im Anschluss an die übrigen Segmente (A; B; C; D) oder Teilsegmente (A1; A2; B1; B2; C1; C2; D1, D2) eine vollständige Schicht von Aufbaumaterial (30) in dem Parksegment ablegt.

5. Verfahren nach einem der vorhergehenden Ansprüche,
**dadurch gekennzeichnet, dass**
die Dauer eines Umlaufs der Beschichtungseinheit (40), als Zeitraum für die Beschichtungseinheit (40) zur einmaligen Überschreitung aller Segmente (A; B; C; D), derart adaptiert wird, dass das Segment (A; B; C; D), welches als Parksegment vorgesehen ist, innerhalb eines einzelnen Umlaufs der Beschichtungseinheit (40) zum Auftragen einer Schicht von Aufbaumaterial (30) entlang aller Segmente (A; B; C; D) selektiv verfestigt wird, sodass die Beschichtungseinheit (40) in dem selektiv verfestigten Parksegment anhaltbar ist.

6. Verfahren nach einem der vorhergehenden Ansprüche,
**gekennzeichnet durch**
das Aktivieren der zugeordneten Bestrahlungseinheit (50) mit den folgenden Schritten ausgeführt wird:
- Aktivieren der zugehörigen Bestrahlungseinheit (50) in dem jeweiligen Segment (A; B; C; D) zur wahlweisen Bestrahlung des zugehörigen ersten oder zweiten Teilsegments (A1; A2; B1; B2; C1; C2; D1; D2) nachdem die Beschichtungseinheit (40) das selektiv zu verfestigende Teilsegment (A1; A2; B1; B2; C1; C2; D1; D2) verlassen hat,
wobei das erste Teilsegment (A1; B1; C1; D1) als Parksegment verwendet werden kann, während das zweite Teilsegment (A2; B2; C2; D2) selektiv verfestigt wird, oder das zweite Teilsegment (A2; B2; C2; D2) als Parksegment verwendet werden kann, während das erste Teilsegment (A1; B1; C1; D1) selektiv verfestigt wird.

7. System, welches zur additiven Fertigung dreidimensionaler Objekte durch schichtweises Aufbringen eines Aufbaumaterials (30) und örtlich selektives Verfestigen des Aufbaumaterials (30) geeignet ist, umfassend eine Steuereinheit, welche dazu vorgesehen ist, das System gemäß einem Verfahren nach einem der vorhergehenden Ansprüche zu steuern und/oder zu regeln, mit einem Bauraum, einer Bauplattform (10) innerhalb des Bauraums, auf der das wenigstens eine herzustellende Objekt (1) schichtweise aufbaubar ist, wenigstens einer Beschichtungseinheit (40) zum schichtweisen Aufbringen des Aufbaumaterials (30) in einer Bauebene (20), die parallel zu der Bauplattform (10) vorgesehen ist, und wenigstens einer ersten Bestrahlungseinheit (50) und einer zweiten Bestrahlungseinheit (50) zur örtlich selektiven Verfestigung des Aufbaumaterials (30) in der Bauebene (20), wobei der Bauraum in Erstreckungsrichtung der Bauplattform (10) wenigstens in ein erstes Segment (A) und in ein zweites Segment (B) unterteilt ist und wenigstens eines der Segmente (A; B; C; D) als Einzelsegment ausgebildet ist oder wenigstens eines der Segmente (A; B; C; D) in wenigstens zwei Teilsegmente (A1; A2; B1; B2; C1; C2; D1; D2) unterteilt ist,
wobei jedem Segment (A; B; C; D) oder den Teilsegmenten (A1; A2; B1; B2; C1; C2; D1; D2) eines Segments (A; B; C; D) wenigstens eine der Bestrahlungseinheiten (50) zugeordnet ist,
wobei die Beschichtungseinheit (40) nacheinander durch das erste Segment (A) und das zweite Segment (B) hindurch bewegbar ist zum Aufbringen einer Schicht von Aufbaumaterial (30),
wobei die Segmente (A; B; C; D) oder Teilsegmente (A1; A2; B1; B2; C1; C2; D1; D2) jeweils mittels der zugeordneten Bestrahlungseinheit (50) selektiv verfestigbar sind, sobald die Beschichtungseinheit (40) eine vollständige Schicht von Aufbaumaterial (30) in dem jeweiligen Segment (A; B; C; D) oder Teilsegment (A1; A2; B1; B2; C1; C2; D1; D2) aufgetragen hat und die Beschichtungseinheit (40) das jeweilige Segment (A; B; C; D) oder Teilsegment (A1; A2; B1; B2; C1; C2; D1; D2) verlassen hat,
wobei die Beschichtungseinheit (40) in einem beliebigen, selektiv verfestigten Segment (A; B; C; D) und/oder Teilsegment (A1; A2; B1; B2; C1; C2; D1; D2) der darauffolgenden Segmente (A; B; C; D) als einem Parksegment anhaltbar ist,
wobei durch die Beschichtungseinheit (40) bis zum Erreichen des Parksegments nur Segmente (A; B; C; D) und/oder Teilsegmente (A1; A2; B1; B2; C1; C2; D1; D2) durchlaufbar sind, die selektiv verfestigt sind.

8. System nach Anspruch 7,
**dadurch gekennzeichnet, dass**
die wenigstens zwei Segmente (A; B; C; D) und/oder deren Teilsegmente (A1; A2; B1; B2; C1; C2; D1; D2) entlang der Bauebene (20) eine geschlossene Bahn, insbesondere Kreisbahn, ausbilden, insbesondere sodass die Beschichtungseinheit (40) unmittelbar, oder mittelbar über mindestens ein weiteres Segment (A; B; C; D) oder dessen Teilsegmente (A1; A2; B1; B2; C1; C2; D1; D2), von dem ersten Segment (A) in das zweite Segment (B) und von dem zweiten Segment (B) in das erste Segment (A) übertreten kann.

9. System nach Anspruch 7 oder 8,
**dadurch gekennzeichnet, dass**
die einzelnen Segmente (A; B; C; D) und/oder deren Teilsegmente (A1; A2; B1; B2; C1; C2; D1; D2) entlang der Bauplattform (10) mit identischer Größe ausgebildet sind und/oder eine vergleichbare Bestrahlungsdauer zur selektiven Verfestigung der aufgebrachten Schicht von Aufbaumaterial (30) entlang der Bauebene (20) aufweisen, sodass eine Gesamtbestrahlungsdauer zur selektiven Verfestigung wenigstens einer Schicht oder mehrerer Schichten des aufgebrachten Aufbaumaterials (30) entlang aller Segmente (A; B; C; D) und/oder Teilsegmente (A1; A2; B1; B2; C1; C2; D1; D2) in der Bauebene (20) minimierbar ist.

10. System nach einem der Ansprüche 7 bis 9,
**dadurch gekennzeichnet, dass**
das System dazu ausgebildet ist, eine Relativbewegung zur Änderung der vertikalen Relativposition zwischen der Bauplattform (10) und der Beschichtungseinheit (40) innerhalb des Bauraums kontinuierlich oder diskontinuierlich bereitzustellen.

11. System nach einem der Ansprüche 7 bis 10,
**dadurch gekennzeichnet, dass**
die Beschichtungseinheit (40) in dem Parksegment weiterbewegbar ist und das Ablegen einer weiteren Schicht von Aufbaumaterial (30) bereitstellbar ist, wenn die Beschichtungseinheit (40) einen Umlauf zum Auftragen einer Schicht von Aufbaumaterial (30) vollziehen kann ohne in ein nicht selektiv verfestigtes Segment (A;B;C;D) oder Teilsegment (A1; A2; B1; B2, C1; C2; D1, D2) einzufahren.

12. System nach einem der Ansprüche 7 bis 11,
**dadurch gekennzeichnet, dass**
die Beschichtungseinheit (40) nacheinander durch das erste Teilsegment (A1; B1; C1; D1) und das zweite Teilsegment (A2; B2; C2; D2) hindurch bewegbar ist,
wobei das erste und zweite Teilsegment (A1; A2; B1; B2; C1; C2; D1; D2) des jeweiligen Segmentes (A; B; C; D) mittels der zugehörigen Bestrahlungseinheit (50) nacheinander oder abwechselnd selektiv verfestigbar sind,
wobei das erste Teilsegment (A1; B1; C1; D1) als Parksegment bereitstellbar ist, während das zweite Teilsegment (A2; B2; C2; D2) selektiv verfestigbar ist oder das zweite Teilsegment (A2; B2; C2; D2) als Parksegment bereitstellbar ist, während das erste Teilsegment (A1; B1; C1; D1) selektiv verfestigbar ist.

13. System nach einem der Ansprüche 7 bis 12,
**dadurch gekennzeichnet, dass** die Steuereinheit vorzugsweise wenigstens dazu ausgelegt ist, die Bewegung und/oder die Dauer eines Umlaufs der Beschichtungseinheit (40) sowie das Aufbringen von Aufbaumaterial (30) durch die Beschichtungseinheit (40), die Aktivierung und Deaktivierung wenigstens einer der Bestrahlungseinheiten (50), vorzugsweise mehrerer Bestrahlungseinheiten (50), besonders bevorzugt aller Bestrahlungseinheiten (50), und/oder die Ausführung der vertikalen Relativbewegung zwischen der Bauplattform (10) und der Beschichtungseinheit (40) innerhalb des Bauraums zu steuern.

14. Computerlesbares Speichermedium, welches Instruktionen enthält, die bewirken, dass das System nach einem der Ansprüche 7 bis 13 die Verfahrensschritte nach einem der Ansprüche 1 bis 6 ausführt.

## Claims

1. Method for the additive production of three-dimensional objects (1) by means of a system which has a building space, a building platform (10) within the building space, on which the at least one object (1) to be produced can be built up layer by layer, at least one coating unit (40) for applying the build-up material (30) layer by layer in a building plane (20), which is provided parallel to the building platform (10), and at least one first irradiation unit (50) and one second irradiation unit (50) for locally selective solidification of the build-up material (30) in the building plane (20),
wherein the method comprises the steps of:
- subdividing the building space into at least a first and a second segment (A; B) along the direction of extension of the building platform (10), wherein at least one of the segments (A; B; C; D) is formed as a single segment or at least one of the segments (A; B; C; D) is divided into at least two partial segments (A1; A2; B1; B2; C1; C2; D1; D2) and each segment (A; B; C; D) and/or the partial segments (A1; A2; B1; B2; C1; C2; D1; D2) of a segment (A; B; C; D) is assigned at least one of the irradiation units (50);
- application of at least one layer of the build-up material (30) by means of the moving coating unit (40) along the segments (A; B; C; D);
- activation of the associated irradiation unit (50) in the respective segment (A; B; C; D) or at least one of the partial segments (A1; A2; B1; B2; C1; C2; D1; D2) for selective solidification of the associated segment (A; B; C; D) or at least one of the associated partial segments (A1; A2; B1; B2; C1; C2; D1; D2) as soon as the coating unit (40) has left the respective segment (A; B; C; D) or partial segment (A1; A2; B1; B2; C1; C2; D1; D2);
- deactivation of the respective irradiation unit (50) as soon as a required irradiation duration is reached and the associated segment (A; B; C; D) or partial segment (A1; A2; B1; B2; C1; C2; D1; D2) is selectively solidified;
- stopping the coating unit (40) in any selectively solidified segment (A; B; C; D) and/or partial segment (A1; A2; B1; B2; C1; C2; D1; D2) of the subsequent segments (A; B; C; D) as a parking segment, wherein the coating unit (40) passes through only segments (A; B; C; D) and/or partial segments (A1; A2; B1; B2; C1; C2; D1; D2), which are selectively solidified, until the parking segment is reached.

2. Method according to claim 1,
**characterized in that**
a change in a relative position between the building platform (10) and the coating unit (40) to provide a modified building plane (20) is continuous or discontinuous.

3. Method according to claim 1 or 2,
**characterized in that**
the coating unit (40) is moved further in the parking segment and the deposition of a further layer of build-up material (30) is started when the coating unit (40) can complete a revolution for applying a layer of build-up material (30) without entering a non-selectively solidified segment (A; B; C; D) or partial segment (A1; A2; B1; B2; C1; C2; D1; D2).

4. Method according to claim 3,
**characterized in that**
the coating unit (40) deposits a complete layer of build-up material (30) in the parking segment following the remaining segments (A; B; C; D) or partial segments (A1; A2; B1; B2; C1; C2; D1, D2).

5. Method according to any one of the preceding claims,
**characterized in that**
the duration of a cycle of the coating unit (40), as a period of time for the coating unit (40) to pass over all segments (A; B; C; D) once, is adapted in such a way that the segment (A; B; C; D), which is provided as a parking segment, is selectively solidified within a single revolution of the coating unit (40) for applying a layer of build-up material (30) along all segments (A; B; C; D), so that the coating unit (40) can be stopped in the selectively solidified parking segment.

6. Method according to any one of the preceding claims, **characterized in that** the activation of the associated irradiation unit (50) is carried out with the following steps:
- activating the associated irradiation unit (50) in the respective segment (A; B; C; D) for selective irradiation of the associated first or second partial segment (A1; A2; B1; B2; C1; C2; D1; D2) after the coating unit (40) has left the partial segment (A1; A2; B1; B2; C1; C2; D1; D2) to be selectively solidified,
wherein the first partial segment (A1; B1; C1; D1) can be used as a parking segment while the second partial segment (A2; B2; C2; D2) is selectively solidified, or the second partial segment (A2; B2; C2; D2) can be used as a parking segment while the first partial segment (A1; B1; C1; D1) is selectively solidified.

7. System which is suitable for the additive production of three-dimensional objects by layer-by-layer application of a build-up material (30) and locally selective solidification of the build-up material (30), comprising a control unit which is provided for controlling and/or regulating the system in accordance with a method according to one of the preceding claims, having a building space, a building platform (10) within the building space, on which the at least one object (1) to be produced can be built up in layers, at least one coating unit (40) for applying the build-up material (30) in layers in a building plane (20), which is provided parallel to the building platform (10), and at least one first irradiation unit (50) and one second irradiation unit (50) for locally selective solidification of the build-up material (30) in the building plane (20), wherein the building space is subdivided in the direction of extension of the building platform (10) at least into a first segment (A) and a second segment (B) and at least one of the segments (A; B; C; D) is designed as a single segment or at least one of the segments (A; B; C; D) is subdivided into at least two partial segments (A1; A2; B1; B2; C1; C2; D1; D2), wherein each segment (A; B; C; D) or the partial segments (A1; A2; B1; B2; C1; C2; D1; D2) of a segment (A; B; C; D) is assigned at least one of the irradiation units (50), wherein the coating unit (40) can be moved successively through the first segment (A) and the second segment (B) for applying a layer of build-up material (30), wherein the segments (A; B; C; D) or partial segments (A1; A2; B1; B2; C1; C2; D1; D2) can each be selectively solidified by means of the associated irradiation unit (50) as soon as the coating unit (40) has applied a complete layer of build-up material (30) in the respective segment (A; B; C; D) or partial segment (A1; A2; B1; B2; C1; C2; D1; D2) and the coating unit (40) has left the respective segment (A; B; C; D) or partial segment (A1; A2; B1; B2; C1; C2; D1; D2), wherein the coating unit (40) can be stopped in any selectively solidified segment (A; B; C; D) and/or partial segment (A1; A2; B1; B2; C1; C2; D1; D2) of the subsequent segments (A; B; C; D) as a parking segment, wherein only segments (A; B; C; D) and/or partial segments (A1; A2; B1; B2; C1; C2; D1; D2) which are selectively solidified can be passed through the coating unit (40) until the parking segment is reached.

8. System according to claim 7,
**characterized in that**
the at least two segments (A; B; C; D) and/or their partial segments (A1; A2; B1; B2; C1; C2; D1; D2) form a closed path, in particular a circular path, along the building plane (20), in particular so that the coating unit (40) can be moved directly or indirectly via at least one further segment (A; B; C; D) or its partial segments (A1; A2; B1; B2; C1; C2; D1; D2), from the first segment (A) into the second segment (B) and from the second segment (B) into the first segment (A).

9. System according to claim 7 or 8,
**characterized in that**
the individual segments (A; B; C; D) and/or their partial segments (A1; A2; B1; B2; C1; C2; D1; D2) are formed along the building platform (10) with an identical size and/or have a comparable irradiation duration for selective solidification of the applied layer of build-up material (30) along the building plane (20), so that a total irradiation duration for selective solidification of at least one layer or several layers of the applied build-up material (30) along all segments (A; B; C; D) and/or partial segments (A1; A2; B1; B2; C1; C2; D1; D2) in the building plane (20) can be minimized.

10. System according to any one of claims 7 through 9,
**characterized in that**
the system is designed to provide a relative movement for changing the vertical relative position between the building platform (10) and the coating unit (40) within the building space continuously or discontinuously.

11. System according to any one of claims 7 through 10,
**characterized in that**
the coating unit (40) can be moved further in the parking segment and the deposition of a further layer of build-up material (30) can be provided if the coating unit (40) can complete a revolution for applying a layer of build-up material (30) without entering a non-selectively solidified segment (A; B; C; D) or partial segment (A1; A2; B1; B2, C1; C2; D1, D2).

12. System according to any one of claims 7 through 11,
**characterized in that**
the coating unit (40) can be moved successively through the first partial segment (A1; B1; C1; D1) and the second partial segment (A2; B2; C2; D2), wherein the first and second partial segments (A1; A2; B1; B2; C1; C2; D1; D2) of the respective segment (A; B; C; D) can be selectively solidified successively or alternately by means of the associated irradiation unit (50), wherein the first partial segment (A1; B1; C1; D1) can be provided as a parking segment, while the second partial segment (A2; B2; C2; D2) can be selectively solidified, or the second partial segment (A2; B2; C2; D2) can be provided as a parking segment, while the first partial segment (A1; B1; C1; D1) can be selectively solidified.

13. System according to any one of claims 7 through 12,
**characterized in that** the control unit is preferably designed at least to control the movement and/or the duration of a revolution of the coating unit (40) as well as the application of build-up material (30) by the coating unit (40), the activation and deactivation of at least one of the irradiation units (50), preferably several irradiation units (50), particularly preferably all irradiation units (50), and/or the execution of the vertical relative movement between the building platform (10) and the coating unit (40) within the building space.

14. Computer-readable memory module containing instructions which cause the system to execute the method steps according to one of claims 7 through 13 according to one of claims 1 through 6.

## Revendications

1. Procédé pour la production additive d'objets tridimensionnels (1) au moyen d'un système qui a un espace de construction, une plateforme de construction (10) au sein de l'espace de construction, sur laquelle l'au moins un objet (1) à produire peut être construit couche par couche, au moins une unité de revêtement (40) pour l'application du matériau de construction (30) couche par couche dans un plan de construction (20), qui est prévu parallèlement à la plateforme de construction (10), et au moins une première unité d'irradiation (50) et une deuxième unité d'irradiation (50) pour une solidification sélective locale du matériau de construction (30) dans le plan de construction (20),
dans lequel le procédé comprend les étapes :
- de subdivision de l'espace de construction en au moins un premier et un deuxième segment (A ; B) le long de la direction d'extension de la plateforme de construction (10), dans lequel au moins l'un des segments (A ; B ; C ; D) est formé en un segment unique ou au moins l'un des segments (A ; B ; C ; D) est divisé en au moins deux segments partiels (A1 ; A2 ; B1 ; B2 ; C1 ; C2 ; D1 ; D2) et à chaque segment (A ; B ; C ; D) et/ou aux segments partiels (A1 ; A2 ; B1 ; B2 ; C1 ; C2 ; D1 ; D2) d'un segment (A ; B ; C ; D) est attribuée au moins l'une des unités d'irradiation (50) ;
- d'application d'au moins une couche du matériau de construction (30) au moyen de l'unité de revêtement (40) se déplaçant le long des segments (A ; B ; C ; D) ;
- d'activation de l'unité d'irradiation (50) associée dans le segment (A ; B ; C ; D) respectif ou au moins l'un des segments partiels (A1 ; A2 ; B1 ; B2 ; C1 ; C2 ; D1 ; D2) pour une solidification sélective du segment (A ; B ; C ; D) associé ou d'au moins l'un des segments partiels (A1 ; A2 ; B1 ; B2 ; C1 ; C2 ; D1 ; D2) associés dès que l'unité de revêtement (40) a quitté le segment (A ; B ; C ; D) ou segment partiel (A1 ; A2 ; B1 ; B2 ; C1 ; C2 ; D1 ; D2) respectif ;
- de désactivation de l'unité d'irradiation (50) respective dès qu'une durée d'irradiation requise est atteinte et le segment (A ; B ; C ; D) ou segment partiel (A1 ; A2 ; B1 ; B2 ; C1 ; C2 ; D1 ; D2) associé est solidifié sélectivement ;
- d'arrêt de l'unité de revêtement (40) dans tout segment (A ; B ; C ; D) et/ou segment partiel (A1 ; A2 ; B1 ; B2 ; C1 ; C2 ; D1 ; D2) solidifié sélectivement des segments (A ; B ; C ; D) suivants en tant que segment de stationnement, dans lequel l'unité de revêtement (40) passe uniquement à travers des segments (A ; B ; C ; D) et/ou segments partiels (A1 ; A2 ; B1 ; B2 ; C1 ; C2 ; D1 ; D2) qui sont solidifiés sélectivement, jusqu'à ce que le segment de stationnement soit atteint.

2. Procédé selon la revendication 1,
**caractérisé en ce que**
un changement d'une position relative entre la plateforme de construction (10) et l'unité de revêtement (40) pour fournir un plan de construction (20) modifié est continu ou discontinu.

3. Procédé selon la revendication 1 ou 2,
**caractérisé en ce que**
l'unité de revêtement (40) est déplacée davantage dans le segment de stationnement et le dépôt d'une autre couche de matériau de construction (30) est démarré lorsque l'unité de revêtement (40) peut effectuer une révolution complète pour l'application d'une couche de matériau de construction (30) sans entrer dans un segment (A ; B ; C ; D) ou segment partiel (A1 ; A2 ; B1 ; B2 ; C1 ; C2 ; D1 ; D2) non solidifié sélectivement.

4. Procédé selon la revendication 3,
**caractérisé en ce que**
l'unité de revêtement (40) dépose une couche complète de matériau de construction (30) dans le segment de stationnement suivant les segments (A ; B ; C ; D) ou les segments partiels (A1 ; A2 ; B1 ; B2 ; C1 ; C2 ; D1, D2) restants.

5. Procédé selon l'une quelconque des revendications précédentes,
**caractérisé en ce que**
la durée d'un cycle de l'unité de revêtement (40), en tant que période pour le passage de l'unité de revêtement (40) sur tous les segments (A ; B ; C ; D) une fois, est adaptée de telle sorte que le segment (A ; B ; C ; D), qui est prévu comme segment de stationnement, est solidifié sélectivement en une seule révolution de l'unité de revêtement (40) pour l'application d'une couche de matériau de construction (30) le long de tous les segments (A ; B ; C ; D), de sorte que l'unité de revêtement (40) peut être arrêtée dans le segment de stationnement solidifié sélectivement.

6. Procédé selon l'une quelconque des revendications précédentes, **caractérisé en ce que** l'activation de l'unité d'irradiation (50) associée est effectuée avec les étapes suivantes :
- activation de l'unité d'irradiation (50) associée dans le segment (A ; B ; C ; D) respectif pour l'irradiation sélective du premier ou deuxième segment partiel (A1 ; A2 ; B1 ; B2 ; C1 ; C2 ; D1 ; D2) associé après que l'unité de revêtement (40) a quitté le segment partiel (A1 ; A2 ; B1 ; B2 ; C1 ; C2 ; D1 ; D2) à solidifier sélectivement,
dans lequel le premier segment partiel (A1 ; B1 ; C1 ; D1) peut être utilisé comme segment de stationnement tandis que le deuxième segment partiel (A2 ; B2 ; C2 ; D2) est solidifié sélectivement, ou le deuxième segment partiel (A2 ; B2 ; C2 ; D2) peut être utilisé comme segment de stationnement tandis que le premier segment partiel (A1 ; B1 ; C1 ; D1) est solidifié sélectivement.

7. Système qui est approprié pour la production additive d'objets tridimensionnels par application couche par couche d'un matériau de construction (30) et solidification sélective locale du matériau de construction (30), comprenant une unité de commande qui est prévue pour commander et/ou réguler le système conformément à un procédé selon l'une des revendications précédentes, ayant un espace de construction, une plateforme de construction (10) au sein de l'espace de construction, sur laquelle l'au moins un objet (1) à produire peut être construit en couches, au moins une unité de revêtement (40) pour l'application du matériau de construction (30) en couches dans un plan de construction (20), qui est prévu parallèle à la plateforme de construction (10), et au moins une première unité d'irradiation (50) et une deuxième unité d'irradiation (50) pour la solidification sélective locale du matériau de construction (30) dans le plan de construction (20), dans lequel l'espace de construction est subdivisé dans la direction d'extension de la plateforme de construction (10) au moins en un premier segment (A) et un deuxième segment (B) et au moins l'un des segments (A ; B ; C ; D) est conçu comme un segment unique ou au moins l'un des segments (A ; B ; C ; D) est subdivisé en au moins deux segments partiels (A1 ; A2 ; B1 ; B2 ; C1 ; C2 ; D1 ; D2), dans lequel à chaque segment (A ; B ; C ; D) ou aux segments partiels (A1 ; A2 ; B1 ; B2 ; C1 ; C2 ; D1 ; D2) d'un segment (A ; B ; C ; D) est attribuée au moins l'une des unités d'irradiation (50), dans lequel l'unité de revêtement (40) peut être déplacée successivement à travers le premier segment (A) et le deuxième segment (B) pour l'application d'une couche de matériau de construction (30), dans lequel les segments (A ; B ; C ; D) ou segments partiels (A1 ; A2 ; B1 ; B2 ; C1 ; C2 ; D1 ; D2) peuvent être chacun solidifiés sélectivement au moyen de l'unité d'irradiation (50) associée dès que l'unité de revêtement (40) a appliqué une couche complète de matériau de construction (30) dans le segment (A ; B ; C ; D) ou segment partiel (A1 ; A2 ; B1 ; B2 ; C1 ; C2 ; D1 ; D2) respectif et que l'unité de revêtement (40) a quitté le segment (A ; B ; C ; D) ou segment partiel (A1 ; A2 ; B1 ; B2 ; C1 ; C2 ; D1 ; D2) respectif, dans lequel l'unité de revêtement (40) peut être arrêtée dans tout segment (A ; B ; C ; D) et/ou segment partiel (A1 ; A2 ; B1 ; B2 ; C1 ; C2 ; D1 ; D2) solidifié sélectivement des segments (A ; B ; C ; D) suivants en tant que segment de stationnement, dans lequel seuls des segments (A ; B ; C ; D) et/ou segments partiels (A1 ; A2 ; B1 ; B2 ; C1 ; C2 ; D1 ; D2) qui sont solidifiés sélectivement peuvent être passés à travers l'unité de revêtement (40) jusqu'à ce que le segment de stationnement soit atteint.

8. Système selon la revendication 7,
**caractérisé en ce que**
les au moins deux segments (A ; B ; C ; D) et/ou leurs segments partiels (A1 ; A2 ; B1 ; B2 ; C1 ; C2 ; D1 ; D2) forment un trajet fermé, en particulier un trajet circulaire, le long du plan de construction (20), en particulier de sorte que l'unité de revêtement (40) peut être déplacée directement ou indirectement via au moins un autre segment (A ; B ; C ; D) ou ses segments partiels (A1 ; A2 ; B1 ; B2 ; C1 ; C2 ; D1 ; D2), à partir du premier segment (A) jusque dans le deuxième segment (B) et à partir du deuxième segment (B) jusque dans le premier segment (A).

9. Système selon la revendication 7 ou 8,
**caractérisé en ce que**
les segments individuels (A ; B ; C ; D) et/ou leurs segments partiels (A1 ; A2 ; B1 ; B2 ; C1 ; C2 ; D1 ; D2) sont formés le long de la plateforme de construction (10) avec une taille identique et/ou ont une durée d'irradiation comparable pour une solidification sélective de la couche appliquée de matériau de construction (30) le long du plan de construction (20), de sorte qu'une durée d'irradiation totale pour la solidification sélective d'au moins une couche ou de plusieurs couches du matériau de construction (30) appliqué le long de tous les segments (A ; B ; C ; D) et/ou segments partiels (A1 ; A2 ; B1 ; B2 ; C1 ; C2 ; D1 ; D2) dans le plan de construction (20) peut être réduite au minimum.

10. Système selon l'une quelconque des revendications 7 à 9,
**caractérisé en ce que**
le système est conçu pour fournir un déplacement relatif destiné à changer la position relative verticale entre la plateforme de construction (10) et l'unité de revêtement (40) au sein de l'espace de construction de manière continue ou discontinue.

11. Système selon l'une quelconque des revendications 7 à 10,
**caractérisé en ce que**
l'unité de revêtement (40) peut être déplacée davantage dans le segment de stationnement et le dépôt d'une autre couche de matériau de construction (30) peut être fourni si l'unité de revêtement (40) peut effectuer une révolution complète pour l'application d'une couche de matériau de construction (30) sans entrer dans un segment (A ; B ; C ; D) ou segment partiel (A1 ; A2 ; B1 ; B2, C1 ; C2 ; D1, D2) non solidifié sélectivement.

12. Système selon l'une quelconque des revendications 7 à 11,
**caractérisé en ce que**
l'unité de revêtement (40) peut être déplacée successivement à travers le premier segment partiel (A1 ; B1 ; C1 ; D1) et le deuxième segment partiel (A2 ; B2 ; C2 ; D2), dans lequel les premier et deuxième segments partiels (A1 ; A2 ; B1 ; B2 ; C1 ; C2 ; D1 ; D2) du segment (A ; B ; C ; D) respectif peuvent être solidifiés sélectivement, successivement ou en alternance, au moyen de l'unité d'irradiation (50) associée, dans lequel le premier segment partiel (A1 ; B1 ; C1 ; D1) peut être prévu comme segment de stationnement, tandis que le deuxième segment partiel (A2 ; B2 ; C2 ; D2) peut être solidifié sélectivement, ou le deuxième segment partiel (A2 ; B2 ; C2 ; D2) peut être prévu comme segment de stationnement, tandis que le premier segment partiel (A1 ; B1 ; C1 ; D1) peut être solidifié sélectivement.

13. Système selon l'une quelconque des revendications 7 à 12,
**caractérisé en ce que** l'unité de commande est de préférence conçue au moins pour commander le déplacement et/ou la durée d'une révolution de l'unité de revêtement (40) ainsi que l'application de matériau de construction (30) par l'unité de revêtement (40), l'activation et la désactivation d'au moins l'une des unités d'irradiation (50), de préférence de plusieurs unités d'irradiation (50), de manière particulièrement préférée de toutes les unités d'irradiation (50), et/ou l'exécution du déplacement relatif vertical entre la plateforme de construction (10) et l'unité de revêtement (40) au sein de l'espace de construction.

14. Module de mémoire lisible par ordinateur contenant des instructions qui amènent le système à exécuter les étapes de procédé selon l'une des revendications 7 à 13 selon l'une des revendications 1 à 6.
